# EUROPEAN PATENT APPLICATION

(11) **EP 1 949 959 A1**
(43) Date of publication of application: **30.07.2008**
(21) Application number: 06823125.7
(22) Date of filing: 31.10.2006
(51) Int. Cl.: B01J 23/58, B01D 53/86, B01D 53/94, B01J 35/04, F01N 3/08, F01N 3/10, F01N 3/24, F01N 3/28, B01J 20/04

(54) **EXHAUST GAS PURIFICATION APPARATUS**

(30) Priority: 07.11.2005 JP 2005322334
(71) Applicant: TOYOTA JIDOSHA KABUSHIKI KAISHA, Toyota-shi Aichi 471-8571 (JP)
(72) Inventor: OGURA, Yoshitsugu, Toyota-shi, Aichi 4718571 (JP)
(74) Representative: Kuhnen & Wacker
(86) International application number: PCT/JP2006/322221
(87) International publication number: WO 2007/052817

(57) **Abstract**

Disclosed is an exhaust gas purifying apparatus, which includes an upstream catalyst (3) having a straight flow structure supported with a first NOx occluding material for occluding NOx in a low temperature range, and with a precious metal, a midstream catalyst (4) having a straight flow structure supported with a second NOx occluding material for efficiently occluding NOx in an intermediate temperature range, and with a precious metal, and a downstream catalyst (5) having a wall flow structure supported with a third NOx occluding material for efficiently occluding NOx in a high temperature range, and with a precious metal. Three types of catalyst corresponding to the temperature of the exhaust gas are capable of sufficiently occluding NOx, thus improving both NOX purification performance and PM purification performance.

## Description

### BACKGROUND OF THE INVENTION

### 1. Field of the Invention

The present invention relates to an exhaust gas purifying apparatus, which is capable of efficiently purifying NOx and PM contained in the exhaust gases from diesel engines.

### 2. Description of the Related Art

With regard to gasoline engines, strict exhaust gas emission control standards and technical advancements therefor have been established, and thus the amounts of hazardous components in the exhaust gases have been greatly decreased. However, diesel engines emit hazardous components in the form of PM (composed mainly of carbon particles, for example, soot, high-molecular-weight hydrogen carbide particles, and sulfurbased particles, such as sulfate), making it more difficult to purify the exhaust gases than for gasoline engines.

Developed to date, exhaust gas purifying apparatuses for diesel engines are largely classified into two types, known as a trap type exhaust gas purifying apparatus (wall flow) and an open type exhaust gas purifying apparatus (straight flow). In particular, the trap type exhaust gas purifying apparatus is known to be a clogged honeycomb structure (diesel PM filter (hereinafter, referred to as "DPF")) made of ceramic. Specifically, the DPF has a ceramic honeycomb structure with cells clogged alternately at opposite opening ends thereof in the form of a checkered pattern. The DPF includes inlet cells clogged at downstream positions with respect to the exhaust gas flow direction, outlet cells adjacent to the inlet cells and clogged at upstream positions with respect to the exhaust gas flow direction, and cell partitions for partitioning the inlet cells and the outlet cells. The exhaust gas is filtered by fine pores of the cell partitions, which thus capture the PM, thereby suppressing the emission of PM.

However, in the DPF, pressure loss is increased, attributable to the accumulation of PM. Thus, it is necessary to regenerate the DPF by periodically removing the accumulated PM using some means therefor. Conventionally, in the case where the pressure loss is increased, the accumulated PM is burned through a heating process using a burner or an electrical heater, or is burned in a manner such that the exhaust gas is sprayed with light oil, burned using an oxidation catalyst, and then supplied in a high temperature state into the DPF, so as to regenerate the DPF. In this case, however, as the PM is accumulated in a larger amount, the temperature required to burn it increases, and thereby heat stress occurs, causing undesirable breakage of the DPF.

Recently, there have been developed continuous regenerative DPFs (filter catalysts) in which an alumina coating layer is formed on the surface of the cell partitions of the DPF and is supported with a catalyst metal such as platinum (Pt). In the presence of such a filter catalyst, because the captured PM is oxidized and burned through the catalytic reaction of the catalyst metal, the PM may be burned simultaneously with or successively to the capture thereof, thereby regenerating the DPF. Further, due to the fact that the catalytic reaction takes place at relatively low temperatures and burning is carried out for a small amount of captured PM, the DPF is subjected only to low heat stress, thus advantageously preventing the breakage thereof.

As an example of the filter catalyst, Japanese Unexamined Patent Publication No. Hei. 09-173866 discloses a filter catalyst, in which the surface of cell partitions thereof is formed with a porous coating layer composed of active alumina having a particle size larger than the average size of fine pores of the cell partitions, and the inner surface of the fine pores thereof is coated with active alumina, having a particle size smaller than the average size of the fine pores of the cell partitions and is further supported with a catalyst metal. Such a filter catalyst enables the decrease in pressure loss while increasing the specific surface area of the coating layer.

A catalyst for purifying gasoline exhaust gases is known to be an NOx storage reduction catalyst (hereinafter, referred to as "NSR"). The NSR functions to occlude NOx using an NOx occluding material in a lean atmosphere having excess oxygen and to allow the NOx occluded by the NOx occluding material to be reduced and purified in an intermittent rich atmosphere (rich spike). Japanese Unexamined Patent Publication No. 2002-021544 discloses an exhaust gas purifying apparatus, in which NSR is disposed upstream of a DPF with respect to the exhaust gas flow direction. Also, there is provided a technique for oxidizing and burning PM while reducing and purifying NOx by spraying light oil to the exhaust gas.

Japanese Unexamined Patent Publication No. Hei. 06-159037 discloses a filter catalyst embodied by a diesel particulate NOx reduction catalyst (DPNR), in which a precious metal and an NOx occluding material are supported on a coating layer, which is formed on the inner surface of fine pores of cell partitions thereof. Such a DPNR is responsible for occluding NOx by the NOx occluding material and reducing and purifying the occluded NOx by spraying a reducing agent, such as light oil.

However, the exhaust gas of the diesel engine is different from that of the gasoline engine in the following ways.

(1) The temperature of gas flowing into the catalyst inlet is 300-400°C in the case of a gasoline engine, but is as low as about 200-300°C in the case of a diesel engine.

(2) Due to the difference in fuel composition, the sulfur concentration of the exhaust gas of the diesel engine is higher than in the gasoline engine.

Hence, when the NSR for gasoline engines is applied to a diesel engine without change, NOx occlusion performance is decreased, the NOx occluding material may suffer from sulfur poisoning, and furthermore, sufficient NOx purification performance cannot be assured. That is, because the temperature of the upstream end of the catalyst is difficult to increase, an NOx occluding material composed of the combination of K and Ba, which are widely used in the NSR for gasoline engines, suffers from sulfur poisoning during use, undesirably greatly decreasing the NOx purification performance.

In the case of the DPNR, an oxidation catalyst is disposed upstream thereof, and a fuel-containing exhaust gas is supplied into the oxidation catalyst, whereby the high-temperature exhaust gas in a reduction atmosphere is supplied to the DPNR and the sulfur-poisoned NOx occluding material is regenerated. However, in the NOx occluding material comprising the combination of K and Ba, the rate of desorption of sulfur from the NOx occluding material is low, making it impossible to sufficiently regenerate the NOx occluding material.

Japanese Unexamined Patent Publication No. 2002-177779 discloses an NOx catalyst for diesel engines, in which Li and K are used as the NOx occluding material and the molar ratio (Li/K) is set to 1.4 or more. When such a catalyst is used, NOx occlusion performance is increased in the low temperature range, and recovery from sulfur poisoning may be improved.

However, the technique according to Japanese Unexamined Patent Publication No. 2002-177779 will be difficult to use to satisfy emission control standards in the near future. Thus, novel catalysts enabling the improvement in NOx purification performance and PM purification performance are required.

### SUMMARY OF THE INVENTION

Therefore, the present invention has been made in view of the above-mentioned problems, and an object of the present invention is to provide an exhaust gas purifying apparatus for diesel engines, which is able to further improve NOx purification performance and PM purification performance.

According to an aspect of the present invention, an exhaust gas purifying apparatus for purifying diesel exhaust gases is characterized in that it comprises an upstream catalyst, disposed upstream with respect to an exhaust gas flow direction and having a straight flow structure supported with a first NOx occluding material for occluding NOx in a low temperature range and with a precious metal, a midstream catalyst, disposed downstream of the upstream catalyst with respect to the exhaust gas flow direction and.having a straight flow structure or a wall flow structure supported with a second NOx occluding material, which occludes more NOx than does the first NOx occluding material in an intermediate temperature range, which is higher than the low temperature range, and with a precious metal, and a downstream catalyst, disposed downstream of the midstream catalyst with respect to the exhaust gas flow direction and having a straight flow structure or a wall flow structure supported with a third NOx occluding material, which occludes more NOx than does the first NOx occluding material and the second NOx occluding material in a high temperature range, which is higher than the intermediate temperature range, and with a precious metal.

### BRIEF DESCRIPTION OF THE DRAWINGS

The above and other objects and features of the present invention will become apparent from the following description of a preferred embodiment, given in conjunction with the accompanying drawings, in which:
FIG. 1 is a graph showing a relation of the catalyst inlet gas temperature and the NOx occlusion amount;
FIG. 2 is a graph showing a relation of the catalyst inlet gas temperature and the sulfur desorption rate;
FIG. 3 is a graph showing the 50% HC purification temperature of NSR supported with an NOx occluding material;
FIG. 4 is a schematic view showing an exhaust gas purifying apparatus of Example 1;
FIG. 5 is a schematic view showing an exhaust gas purifying apparatus of a conventional example;
FIG. 6 is a graph showing the saturated NOx occlusion amount after a test for resistance to thermal degradation;
FIG. 7 is a graph showing the saturated NOx occlusion amount after a test for sulfur poisoning degradation; and
FIG. 8 is a schematic view showing an exhaust gas purifying apparatus of Example 5.

### DETAILED DESCRIPTION OF THE PREFERRED EMBODIMENTS

Various embodiments of the present invention will now be described in detail with reference to the accompanying drawings.

Thorough research conducted by the present inventors resulted in the finding that various NOx occluding materials have the following properties.

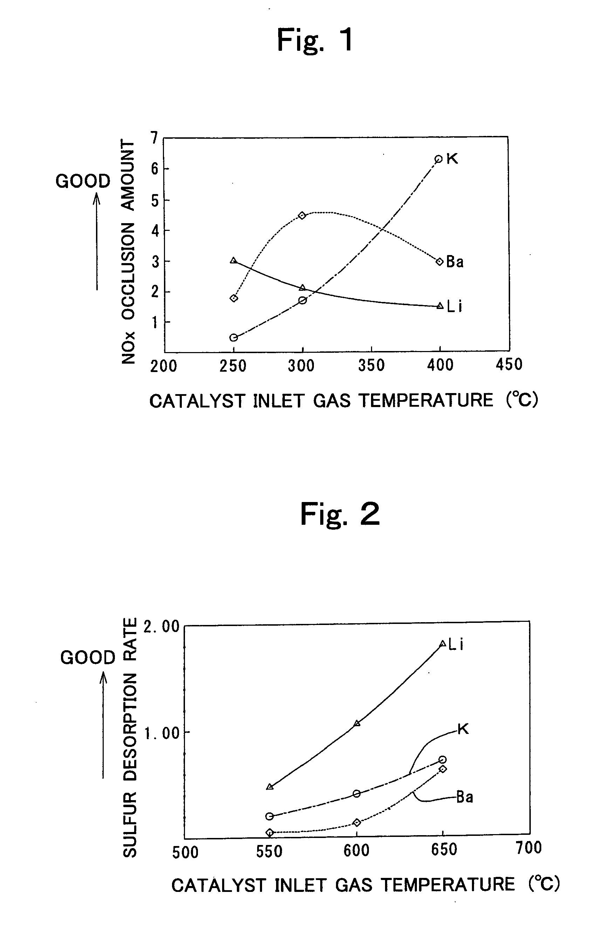

(1) Temperature-dependent NOx Occlusion Performance
As shown in FIG. 1, the relation of the temperature and the NOx occlusion amount varies depending on the type of NOx occluding material. That is, the NOx occluding material has a predetermined temperature range showing maximum NOx occlusion capacity, in the order:
(Li, Mg) < (Ba, Ca, Sr) < (K, Na, Cs, Rb).

(2) NOx Occlusion Capacity
The NOx occluding material exhibits NOx occlusion capacity with respect to the unit loading thereof, in the order:
(Cs) > (Na, K, Rb, Ba, Sr, Ca) > (Mg, Li).

(3) Sulfur Poisoning Resistance
As shown in FIG. 2, the relation of the temperature and the sulfur desorption rate varies depending on the type of NOx occluding material. That is, the easiness of sulfur poisoning or the easiness of decomposition of sulfur-poisoned NOx occluding material is defined in the order:
(Li, Mg) > (K, Na, Cs, Rb) > (Ba, Ca, Sr).

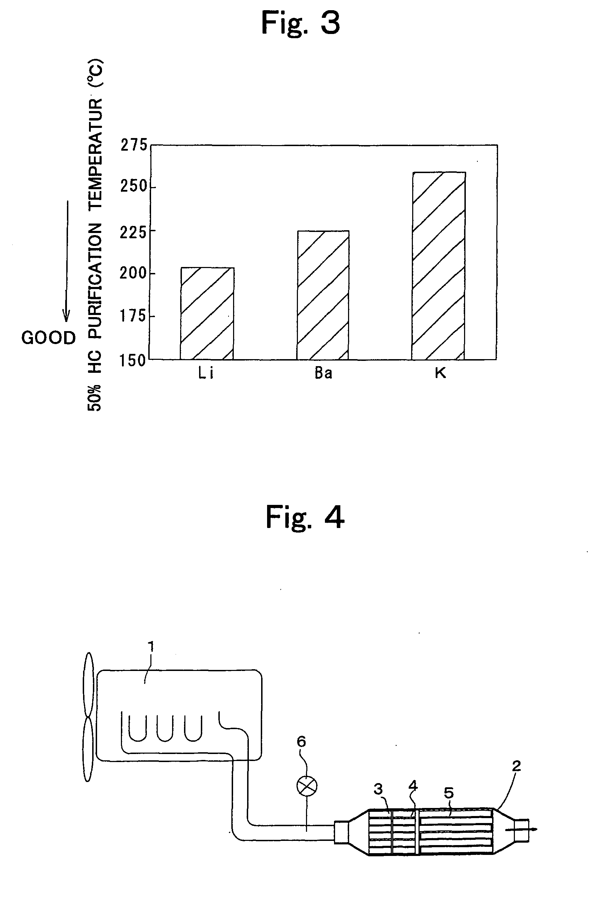

(4) Degradation of Activity of Precious Metal As shown in FIG. 3, the NOx occluding material covers a precious metal, and thus degrades the activity of the precious metal, in the order:
(K, Cs, Na, Rb) > (Ba, Ca, Sr) > (Li, Mg).

Accordingly, the optimal catalyst construction realizable from these results is precisely the exhaust gas purifying apparatus of the present invention.

An upstream catalyst, disposed upstream with respect to the exhaust gas flow direction, has a straight flow structure and is NSR supported with a first NOx occluding material for occluding NOx in a low temperature range, and a precious metal.

Into the upstream catalyst, a low-temperature exhaust gas is supplied. If the upstream catalyst has a wall flow structure, the PM immediately accumulates and pressure loss is thus increased, making it difficult to use the catalyst. Hence, the straight flow structure is adapted for the upstream catalyst. Such a structure is formed in a honeycomb shape, a foam shape, or a pellet shape. In the case of a honeycomb shape, the upstream catalyst is NSR comprising a honeycomb substrate, a coating layer formed of porous oxide on the surface of the cell partitions of the honeycomb substrate, and a precious metal and a first NOx occluding material supported on the coating layer.

The honeycomb substrate may be formed from heat-resistant ceramics, such as cordierite or silicon nitride, or from metal foil.

The porous oxide constituting the coating layer includes, for example, any one of alumina, zirconium oxide, titania, cerium oxide and silica, or one or more of compound oxides composed of two or more of the above components. The coating layer is formed in an amount of 100-300 g per liter of the honeycomb substrate, as in conventional NSR.

The precious metal is exemplified by Pt, Pd, Rh, and Ir. Particularly useful is Pt having high oxidation activity. The precious metal is supported in an amount of 0.1-10 g per liter of the honeycomb substrate, as in conventional NSR.

The first NOx occluding material is an NOx occluding material that is able to occlude NOx in the low temperature range, and preferably includes at least one of Li and Mg, exhibiting high NOx occlusion capacity at about 250°C. Alternatively, there may be a combination that at least one of Li and Mg is contained as a primary component and another NOx occluding material is contained as a secondary component. However, at least one selected from among K, Na, Cs and Rb has a large tendency to cover a precious metal, to undesirably decrease the oxidation activity of the precious metal, and therefore must not be contained in the upstream catalyst requiring high oxidation activity. Also, because at least one selected from among Ba, Ca, and Sr has a tendency to cover a precious metal to undesirably decrease the activity thereof, it must not be contained in the upstream catalyst. The first NOx occluding material is supported in an amount of 0.01-1 mol per liter of the honeycomb substrate, as in conventional NSR. Preferably, the supported amount thereof is at least 0.1 mol/L.

A midstream catalyst, which is disposed downstream of the upstream catalyst with respect to the exhaust gas flow direction, is supported with a second NOx occluding material and a precious metal, in which the second NOx occluding material occludes more NOx than does the first NOx occluding material in an intermediate temperature range, which is higher than the low temperature range, at which the upstream catalyst manifests maximum NOx occlusion capacity.

The midstream catalyst may have either a straight flow structure or a wall flow structure. Among these two structures, particularly preferable is a straight flow structure. Thus, a straight flow structure having a honeycomb shape is described below. The midstream catalyst comprises a honeycomb substrate, a coating layer formed of porous oxide on the surface of the cell partitions of the honeycomb substrate, and a precious metal and a second NOx occluding material supported on the coating layer. The basic structure thereof is the same as that of the upstream catalyst, with the exception that the second NOx occluding material is supported thereon.

The second NOx occluding material occludes more NOx than does the first NOx occluding material in the intermediate temperature range, which is higher than the low temperature range, at which the upstream catalyst exhibits maximum NOx occlusion capacity, and preferably includes at least one selected from Ba, Ca, and Sr, having high occlusion capacity at about 300°C. Alternatively, there may be a combination that at least one selected from Ba, Ca and Sr is contained as a primary component and another NOx occluding material is contained as a secondary component. The second NOx occluding material is supported in an amount of 0.01-1 mol per liter of the honeycomb substrate, as in conventional NSR. Preferably, the supported amount thereof is at least 0.025 mol/L.

A downstream catalyst, which is disposed downstream of the midstream catalyst with respect to the exhaust gas flow direction, comprises a third NOx occluding material and a precious metal, in which the third NOx occluding material occludes more NOx than does the first NOx occluding material or the second NOx occluding material in a high temperature range, which is higher than the intermediate temperature range, at which the midstream catalyst exhibits maximum NOx occlusion capacity.

The downstream catalyst may be formed of either a straight flow structure or a wall flow structure. In particular, a wall flow structure is preferable, and thus a honeycomb-shaped wall flow structure is described below. The downstream catalyst comprises a honeycomb substrate having a wall flow structure, a coating layer formed of porous oxide on the surface of cell partitions thereof, and/or on the inner surface of the pores of the cell partitions thereof, a precious metal and a third NOx occluding material supported on the coating layer.

The honeycomb substrate includes inlet cells clogged at downstream positions with respect to the exhaust gas flow direction, outlet cells adjacent to the inlet cells and clogged at upstream positions with respect to the exhaust gas flow direction, and porous cell partitions for partitioning the inlet cells and the outlet cells and having a plurality of fine pores. Typically, the honeycomb substrate is made from heat resistant ceramic, such as cordierite. In some cases, the substrate may be provided in the form of a laminate including metal nonwoven fabric constituting cell partitions and a metal corrugated plate.

The porous oxide used for the coating layer includes, for example, alumina, zirconium oxide, titania, cerium oxide and silica, or one or more of compound oxides composed of two or more of the above components. The coating layer is formed in an amount of 30-200 g per liter of the honeycomb substrate, as in conventional DPNR. When the amount of the coating layer is less than 30 g/L, the durability of precious metal or NOx occluding material is inevitably decreased. On the other hand, when the amount of the coating layer exceeds 200 g/L, pressure loss is extremely increased, and thus there is no effectiveness.

Examples of the precious metal include Pt, Pd, Rh, and Ir. Particularly useful is Pt, having high oxidation activity. The precious metal is supported in an amount of 0.1-5 g per liter of the honeycomb substrate, as in conventional DPNR. If the supported amount thereof is less than the lower limit, the activity is considerably decreased, and thus there is no effectiveness. On the other hand, if the supported amount thereof exceeds the upper limit, the activity is saturated and the cost is increased.

The third NOx occluding material occludes more NOx than does the second NOx occluding material in the high temperature range, which is higher than the intermediate temperature range, at which the midstream catalyst shows maximum NOx occlusion capacity, and preferably includes at least one selected from K, Na, Cs. and Rb, having high NOx occlusion capacity at about 400°C. Alternatively, there may be a combination that at least one selected from among K, Na, Cs and Rb is contained as a primary component and another NOx occluding material is contained as a secondary component. The third NOx occluding material is supported in an amount of 0.01-1 mol per liter of the honeycomb substrate, as in conventional DPNR. Preferably, the supported amount thereof is at least 0.05 mol/L.

At least one of the midstream catalyst and the downstream catalyst is preferably DPNR having a wall flow structure. In particular, it is preferred that the downstream catalyst be DPNR. The upstream catalyst, the midstream catalyst, and the downstream catalyst are sequentially disposed from an upstream position toward a downstream position with respect to the exhaust gas flow direction. Although these catalysts may be spaced apart from each other at predetermined intervals, they are preferably arranged as closely as possible so as to prevent the temperature of the exhaust gas from decreasing. In addition, the coating layers may be separately applied, such that the upstream catalyst, the midstream catalyst, and the downstream catalyst are sequentially disposed from the upstream position of one honeycomb substrate. In addition, another catalyst may be disposed between the respective catalysts, or alternatively, an oxidation catalyst or a three-way catalyst may be further disposed upstream of the upstream catalyst, or a DPF may be further disposed downstream of the downstream catalyst.

The exhaust gas purifying apparatus thus constructed exhibits the following effects.

(1) NOx Purification Performance
In the exhaust gas purifying apparatus of the present invention, an exhaust gas first flows into the upstream catalyst. Because the upstream catalyst is supported with the first NOx occluding material for sufficiently occluding NOx in the low temperature range, NOx of the low-temperature exhaust gas is occluded. Further, in the upstream catalyst, HC, CO and NO of the exhaust gas are oxidized, thereby increasing the exhaust gas temperature. However, a catalyst supported with K is problematic in that it covers the precious metal in the low temperature range, and the oxidation activity of the precious metal is undesirably decreased. Hence, the upstream side catalyst is constructed so as not to contain at least one selected from among K, Na, Cs and Rb, and thereby, the oxidation activity of the upstream side catalyst is improved in the low temperature range. In the case where at least one selected from among Ba, Ca and Sr is not contained, the oxidation activity in the low temperature range is further improved.

The exhaust gas, which is in the intermediate temperature range due to the increase in the temperature, flows into the midstream catalyst. Because the midstream catalyst is supported with the second NOx occluding material for sufficiently occluding NOx in the intermediate temperature range, NOx, which has not been occluded on the upstream catalyst, is sufficiently occluded. Further, in the presence of the midstream catalyst, HC, CO and NO of the exhaust gas, which have not been oxidized by the upstream catalyst, are oxidized, thereby further increasing the temperature of the exhaust gas.

The exhaust gas, which is in the high temperature range due to the increase in the temperature, flows into the downstream catalyst. Because the downstream catalyst is supported with the third NOx occluding material for sufficiently occluding NOx in the high temperature range, NOx, which has not been occluded on the upstream catalyst and the midstream catalyst, is sufficiently occluded.

Thus, according to the exhaust gas purifying apparatus of the present invention, at least three types of catalyst, corresponding to the temperature of the exhaust gas, are provided to sufficiently occlude NOx, consequently exhibiting high NOx purification performance in a wide temperature range from low temperatures to high temperatures.

(2) PM Purification Performance
In the exhaust gas purifying apparatus of the present invention, the exhaust gas first flows into the upstream catalyst, and HC, CO and NO of the exhaust gas are efficiently oxidized, thus increasing the temperature of the exhaust gas. Thereby, the oxidation and burning of PM captured by the midstream catalyst or the downstream catalyst, having the wall flow structure or the DPF disposed in the downstream thereof, may be promoted.

(3) Sulfur Poisoning Resistance
The upstream catalyst, into which the low-temperature exhaust gas flows, is supported with at least one of Li and Mg, which make it difficult to form sulfur oxides and also which decompose sulfates in the low temperature range, remarkably increasing sulfur poisoning resistance.

(4) Regenerability
In the case where at least one of the midstream catalyst and the downstream catalyst is DPNR, when the exhaust pressure loss reaches a predetermined value, a reducing agent, such as light oil, is added to the exhaust gas upstream of the upstream catalyst, and thus the temperature of the exhaust gas is increased due to oxidation reaction heat by the upstream catalyst, after which the exhaust gas having a high temperature is supplied into the DPNR. Accordingly, the accumulated PM is oxidized and burned. Moreover, because the oxidation activity of the upstream catalyst is high, as mentioned above, the temperature of the exhaust gas is rapidly increased, resulting in improved PM oxidation activity. Also, when the downstream catalyst is DPNR, the oxidation and burning of PM are promoted by the third NOx occluding material, such as K. Thus, the PM capture performance of the DPNR is rapidly recovered.

(Example)
The present invention is described in detail through the following test examples, examples, and comparative examples.

(Test Example 1)
Catalyst powder, in which alumina powder was supported with Pt, was prepared and was then pelletized according to a routine method, thus obtaining a pellet catalyst. The pellet catalyst was supported with respective NOx occluding materials using an aqueous nitrate solution of each of K, Ba and Li, and three types of NSR were thus manufactured. The Pt was supported in an amount of 2 g per liter of the pellet catalyst, and the NOx occluding material was supported in an amount of 0.1 mol per liter of the pellet catalyst.

The respective NSR catalysts were charged in identical amounts into an evaluation device, and the NOx occlusion amount was determined depending on the catalyst inlet gas temperature using the same model gas. The results are shown in FIG. 1.

As is apparent from FIG. 1, the temperature for sufficiently occluding NOx can be seen to vary depending on the type of NOx occluding material. That is, the NSR using Li showed high NOx occlusion capacity in the low temperature range of about 250°C, the NSR using Ba showed high NOx occlusion capacity in the intermediate temperature range of about 300°C, and the NSR using K showed high NOx occlusion capacity in the high temperature range of about 400°C.

(Test Example 2)
Catalyst powder composed of alumina powder and Pt, supported thereon, was prepared into a slurry, after which the slurry was applied on a cordierite honeycomb substrate through wash coating, thus forming a coating layer. Further, using an aqueous nitrate solution of each of K, Ba and Li, respective NOx occluding materials were absorbed and supported on the coating layer, thereby manufacturing three types of NSR. The Pt was supported in an amount of 2 g per liter of the pellet catalyst, and the NOx occluding material was supported in an amount of 0.1 mol per liter of the pellet catalyst.

The respective NSR catalysts were charged into an evaluation device, and then sulfur-poisoned using a model gas in a lean atmosphere containing SO₂. The change in concentration of SO₂, discharged at the time of conversion into rich model gas, was determined depending on the catalyst inlet gas temperature. Further, the SO₂ desorption rate was calculated from the change in the concentration of SO₂. The results thereof are given as the sulfur desorption rate in FIG. 2. Furthermore, HC purification rates were continuously measured at the time of increasing the temperature under the flow of a model gas in a lean atmosphere, and 50% HC purification temperatures were determined. The results are shown in FIG. 3.

From FIG. 2, the sulfur desorption rate can be seen to vary depending on the type of NOx occluding material. Specifically, the NSR using Li can be seen to exhibit a higher sulfur desorption rate than the NSR using K or the NSR using Ba. Among three types of NOx occluding material, Li is demonstrated to manifest superior sulfur poisoning resistance.

Further, from FIG. 3, the NSR using Li can be seen to exhibit higher oxidation activity than the NSR using K or the NSR using Ba. That is, it appears that the NSR using Ba or K decreases the oxidation activity of Pt, and in particular, that K remarkably decreases the activity thereof. However, it can be seen that Li slightly decreases the activity of Pt at all.

(Example 1)
Based on the above results of test examples, an exhaust gas purifying gas of FIG. 4 was manufactured. The exhaust gas purifying apparatus was composed of a catalytic converter 2 disposed as an underfloor catalytic converter in the exhaust system of a diesel engine 1 having 2000 cc displacement. The catalyst converter 2 consisted of an upstream catalyst 3, a midstream catalyst 4, and a downstream catalyst 5 sequentially disposed in series from an upstream position toward a downstream position with respect to the exhaust gas flow direction. The upstream catalyst 3 and the midstream catalyst 4 were NSR, having a straight flow structure, and the downstream catalyst 5 was DPNR, having a wall flow structure. The catalyst converter 2 was provided with an injector 6 for adding fuel to the exhaust gas at the upstream position thereof.

The upstream catalyst 3 was supported with 0.3 mol/L of Li as the NOx occluding material, and the midstream catalyst 4 was supported with 0.15 mol/L of Ba, as the NOx occluding material. Further, the downstream catalyst 5 was supported with 0.3 mol/L of K as the NOx occluding material.

Below, the method of manufacturing respective catalysts is described, and a detailed description of the construction thereof is omitted.

<Upstream Catalyst>
A honeycomb substrate having a straight flow structure with a diameter of 129 mm and a length of 50 mm was prepared. Separately, alumina powder, zirconium oxide powder, and titania powder were mixed in predetermined amounts, and then milled with ion exchange water and a binder, thus formulating a slurry. The slurry was applied on the honeycomb substrate through wash coating, dried at 120°C for 2 hours, and then sintered at 600°C for 2 hours, thus forming a coating layer. The coating layer was formed in an amount of 200 g per liter of the honeycomb substrate.

Next, a predetermined amount of dinitrodiamine platinum solution was impregnated into the coating layer, dried at 120°C for 2 hours, and then sintered at 500°C for 1 hour, thus supporting Pt on the coating layer. Further, a predetermined amount of aqueous lithium acetate solution was impregnated into the coating layer, dried at 120°C for 2 hours, and then sintered at 500°C for 1 hour, thus supporting Li on the coating layer. Thereby, an upstream catalyst 3, on which 3 g of Pt and 0.3 mol of Li were supported per liter of the honeycomb substrate, was manufactured.

<Midstream Catalyst >
As in the upstream catalyst, the honeycomb substrate having the coating layer was used, and Pt was supported thereon in the same manner. Further, a predetermined amount of aqueous barium acetate solution was impregnated into the coating layer, dried at 120°C for 2 hours, and then sintered at 500°C for 1 hour, thus supporting Ba on the coating layer. Thereby, a midstream catalyst 4, on which 3 g of Pt and 0.15 mol of Ba were supported per liter of the honeycomb substrate, was manufactured.

<Downstream Catalyst>
A commercially available DPF substrate having a wall flow honeycomb structure with a diameter of 129 mm and a length of 150 mm was prepared. Alumina powder, zirconium oxide powder, and titania powder were mixed in predetermined amounts, and then milled with ion exchange water and a binder, thus formulating a slurry. The slurry was applied on the cell partitions through wash coating in a manner such that the slurry was injected into the passage, of the inlet cells of the DPF substrate and then sucked from the passage of the outlet cells thereof, after which it was dried at 120°C for 2 hours, and then sintered at 600°C for 2 hours, thus forming a coating layer. The coating layer was formed in an amount of 125 g per liter of the DPF substrate. The coating layer was formed on the surface of the cell partitions and on the inner surface of the pores of the cell partitions.

Next, a predetermined amount of dinitrodiamine platinum solution was impregnated into the coating layer, dried at 120°C for 2 hours, and then sintered at 500°C for 1 hour, thus supporting Pt on the coating layer. Further, a predetermined amount of aqueous potassium acetate solution was impregnated into the coating layer, dried at 120°C for 2 hours, and then burned at 500°C for 1 hour, thus supporting K on the coating layer. Thereby, a downstream catalyst 5, on which 3 g of Pt and 0.3 mol of K were supported per liter of the honeycomb substrate, was manufactured.

(Example 2)
An exhaust gas purifying apparatus was manufactured in the same manner as in Example 1, with the exception that the upstream catalyst 3 was supported with 0.3 mol/L of Mg, as the NOx occluding material, the midstream catalyst 4 was supported with 0.15 mol/L of Sr, as the NOx occluding material, and the downstream catalyst 5 was supported with 0.3 mol/L of Cs, as the NOx occluding material.

(Example 3)
An exhaust gas purifying apparatus was manufactured in the same manner as in Example 1, with the exception that the upstream catalyst 3 was supported with 0.2 mol/L of Li and 0.05 mol/L of Mg as the NOx occluding material, the midstream catalyst 4 was supported with 0..075 mol/L of Ba and 0.075 mol/L of Ca as the NOx occluding material, and the downstream catalyst 5 was supported with 0.15 mol/L of Cs and 0.15 mol/L of Na as the NOx occluding material.

(Example 4)
An exhaust gas purifying apparatus was manufactured in the same manner as in Example 1, with the exception that the upstream catalyst 3 was supported with 0.2 mol/L of Li and 0.05 mol/L of Ba as the NOx occluding material, the midstream catalyst 4 was supported with 0.1 mol/L of Ba and 0.1 mol/L of Li as the NOx occluding material, and the downstream catalyst 5 was supported with 0.2 mol/L of K and 0.1 mol/L of Li as the NOx occluding material.

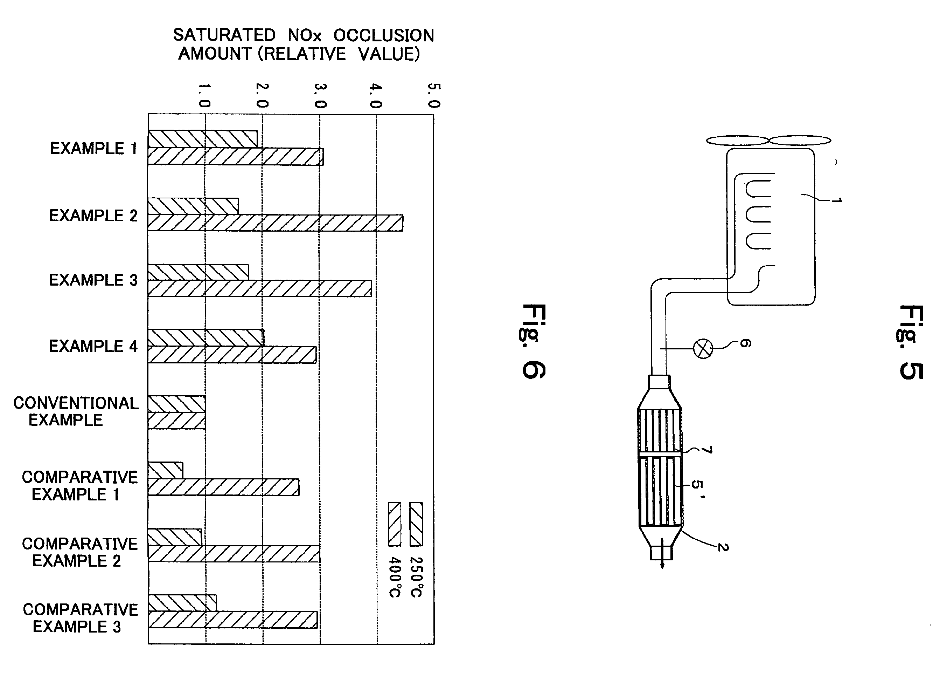

(Conventional Example)
A honeycomb substrate having a straight flow structure with a diameter of 129 mm and a length of 100 mm was prepared, after which 200 g/L of a coating layer was formed in the same manner as in Example 1, and also, 3 g/L of Pt, 0.2 mol/L of Li, 0.1 mol/L of Ba, and.0.05 mol/L of K were supported thereon. As shown in FIG. 5, the catalyst 7 thus obtained was disposed in the catalyst converter 2, instead of the upstream catalyst 3 and the midstream catalyst 4, and a downstream catalyst 5', which was the same as that used in Example 1, with the exception of being supported with 0.2 mol/L of Li, 0.05 mol/L of Ba, and 0.05 mol/L of K, was disposed downstream thereof, thus manufacturing an exhaust gas purifying apparatus of a conventional example.

(Comparative Example 1)
An exhaust gas purifying apparatus was manufactured in the same manner as in Example 1, with the exception that the upstream catalyst 3 was supported with 0.3 mol/L of K as the NOx occluding material, and the downstream catalyst 5 was supported with 0.3 mol/L of Li as the NOx occluding material. The midstream catalyst 4 was the same of Example 1.

(Comparative Example 2)
An exhaust gas purifying apparatus was manufactured in the same manner as in Example 1, with the exception that the upstream catalyst 3 was supported with 0.15 mol/L of Ba as the NOx occluding material, the midstream catalyst 4 was supported with 0.3 mol/L of K as the NOx occluding material, and the downstream catalyst 5 was supported with 0.2 mol/L of K and 0.1 mol/L of Li as the NOx occluding material.

(Comparative Example 3)
An exhaust gas purifying apparatus was manufactured in the same manner as in Example 1, with the exception that the upstream catalyst 3 was supported with 0.1 mol/L of Li and 0.1 mol/L of Ba as the NOx occluding material, the midstream catalyst 4 was supported with 0.2 mol/L of K and 0.1 mol/L of Li as the NOx occluding material, and the downstream catalyst 5 was supported with 0.1 mol/L of K and 0.1 mol/L of Ba as the NOx occluding material.

<Test>

**[Table 1]**

| | Supported amount of NOₓ occluding material (mol/L) | | | | | | | | | | | | | |
|---|---|---|---|---|---|---|---|---|---|---|---|---|---|---|
| | Upsteram Catalyst | | | | Midstream Catalyst | | | | | Downstream Catalyst | | | | |
| | Li | Mg | Ba | K | Ba | Sr | Ca | Li | K | K | Na | Cs | Li | Ba |
| Example 1 | 0. 3 | - | - | - | 0.15 | - | - | - | - | 0.3 | - | - | - | - |
| Example 2 | - | 0. 3 | - | - | - | 0.15 | - | - | - | - | - | 0. 3 | - | - |
| Example 3 | 0.2 | 0.05 | - | - | 0.075 | - | 0.075 | - | - | - | 0. 15 | 0.15 | - | - |
| Example 4 | 0. 2 | - | 0. 05 | - | 0.1 | - | - | 0.1 | - | 0. 2 | - | - | 0.1 | - |
| Conventional Example | 0.2 | - | 0.1 | 0.05 | - | | | | | 0.05 | - | - | 0.2 | 0.05 |
| Comparative Example 1 | - | - | - | 0.3 | 0.15 | - | - | - | - | - | - | - | 0. 3 | - |
| Comparative Example 2 | - | - | 0.15 | - | - | - | - | - | 0.3 | 0.2 | - | - | 0.1 | - |
| Comparative Example 3 | 0.1 | - | 0.1 | - | - | - | - | 0.1 | 0.2 | 0.1 | - | - | - | 0.1 |

For the catalysts of the examples and comparative examples, heat treatment was conducted at 750°C for 5 hours in an air atmosphere, and durability was thus degraded. After the durability was degraded, the catalyst of each of the examples and comparative examples was mounted in the catalytic converter 2, and the following tests were conducted.

(NOx Purification Performance Test)
Under the flow of exhaust gas in a lean atmosphere, light oil was added to the exhaust gas through the injector 6, and thus the exhaust gas atmosphere was converted into a rich atmosphere, after which the apparatus was operated for 60 sec. Next, the addition of fuel was stopped, and the amount of NOx. occluded (saturated NOx occlusion amount) until the concentration of NOx in the exhaust gas was constant from the time of stopping the addition of fuel was measured. This test was conducted in two levels under conditions of engine rotation at 1600 rpm (catalyst inlet gas temperature: 250°C), and engine rotation at 2250 rpm (catalyst inlet gas temperature: 400°C). The results are shown in FIG. 6 as values relative to those of the exhaust gas purifying apparatus of the conventional example.

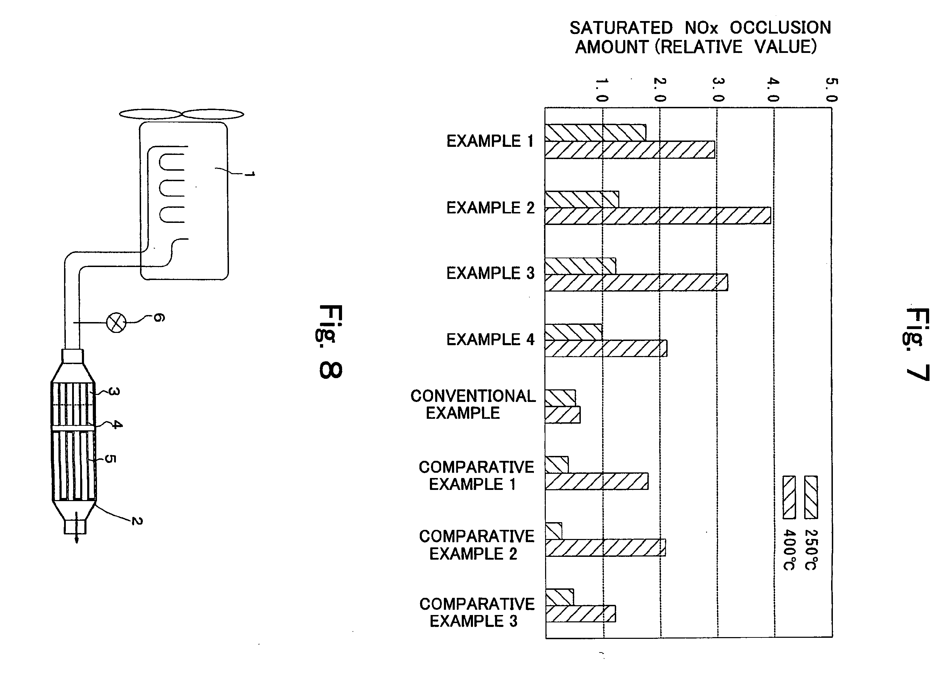

(Sulfur Poisoning Resistance Test)
The exhaust gas purifying apparatus was operated under conditions of 2000 rpm and 80 Nm using light oil containing 350 ppm sulfur as the fuel, and about 5 g of sulfur was passed through. the exhaust gas purifying apparatus. Then, light oil was added through the injector 6, and the temperature of the exhaust gas was increased until the catalyst bed temperature was 650°C. Light oil was added for 15 min from the time of reaching the catalyst bed temperature, and thus a rich atmosphere, in which the catalyst bed temperature was 650 °C, was maintained, after which recovery treatment from sulfur poisoning was conducted. The sulfur adsorption treatment and the recovery treatment from sulfur poisoning were performed 6 times, after which the saturated NOx occlusion amount was measured as above. The results are shown in FIG. 7 as relative values, taking the results of the exhaust gas purifying apparatus of the conventional example in the NOx purification performance test as 1.

<Evaluation>
In the exhaust gas purifying apparatus of the conventional example, Li was used in a large amount in the upstream catalyst, thus increasing the NOx occlusion performance in the low temperature range. Nevertheless, in the low temperature range of 250 °C , the NOx purification performance thereof was inferior to those of the examples and comparative examples. This is considered to be because the upstream catalyst is supported with K, which is responsible for decreasing the activity of Pt. Further, in the high temperature range of 400°C, the results of the conventional example were considerably different from those of the examples and comparative examples, compared to the case of 250°C. This is assumed to be because Ba or K, exhibiting higher NOx occlusion capacity in the intermediate temperature range and the high temperature range, is supported only in a small amount.

In addition, in the conventional example, Ba, which is poor in terms of sulfur desorption, was supported on the upstream part, and thus NOx purification performance after the recovery treatment from sulfur poisoning was low. That is, even if the catalyst bed temperature was 650°C, the temperature of the upstream catalyst was limited to 500-550°C. As is apparent from FIG. 2, it is difficult to use Ba to realize sulfur desorption.

In the purifying apparatus of each of the comparative examples, NOx purification performance was higher than the conventional example in the high temperature range of 400 °C but was similar to the conventional example in the low temperature range of 250°C. Compared to the conventional example, after the sulfur poisoning resistance test, NOx purification performance in the low temperature range of 250 °C was lower, and furthermore, after the sulfur poisoning resistance test, NOx purification performance in the high temperature range of 400°C was eminently lower. That is, in the respective comparative examples, because K, negatively affecting the activity of Pt, or Ba, having poor sulfur desorption, was supported on the upstream catalyst, the NOx occlusion performance in the low temperature range was low, and furthermore, high-temperature NOx purification performance was drastically decreased due to sulfur poisoning.

Compared to the conventional example and the comparative examples, the purifying apparatus of each of the examples exhibited higher NO purification performance, both at 250 °C and 400 °C . Further, after the sulfur poisoning resistance test, the NOx purification performance was only slightly decreased, and high sulfur poisoning resistance was exhibited. This is considered to be due to the optimization of the types and amounts of NOx occluding materials supported on the upstream, midstream, and downstream catalysts.

(Example 5)
FIG. 8 illustrates an exhaust gas purifying apparatus of the present invention. The purifying apparatus was composed of an upstream side catalyst having the same size as in the conventional example, and the same downstream catalyst 5 as in Example 1, disposed downstream thereof. The upstream side catalyst was comprised of the upstream catalyst 3 and the midstream catalyst 4 dividedly applied on the same honeycomb substrate as in the conventional example.

The upstream side catalyst was manufactured as follows. That is, the same honeycomb substrate as in the conventional example, having a straight flow structure with a diameter of 129 mm and a length of 100 mm, was prepared, and the coating layer was formed as in the conventional example. Further, 3 g/L of Pt and 0.3 mol/L of Li were supported on the first half corresponding a section between the upstream end and the center of the upstream side catalyst, as in the upstream catalyst 3 of Example 1, and simultaneously, 3 g/L of Pt and 0.15 mol/L of Ba were supported on the second half corresponding to a section between the downstream end and the center of the upstream side catalyst, as in the midstream catalyst 4 of Example 1.

In the present example, the upstream catalyst 3 and the midstream 4, which were dividedly formed, were sequentially disposed upstream of a downstream side catalyst 5, as in Example 1. Even though the apparatus was constructed as above, it could exhibit the same activity as the exhaust gas purifying apparatus of Example 1.

While the invention has been shown and described with reference to preferred embodiments thereof, it will be understood by those skilled in the art that various changes and modification may be made without departing from the spirit and scope of the invention as defined in the following claims.

## Claims

1. An exhaust gas purifying apparatus for purifying an exhaust gas from a diesel engine, comprising:
an upstream catalyst, disposed upstream with respect to an exhaust gas flow direction, and having a straight flow structure supported with a first NOx occluding material for occluding NOx in a low temperature range, and with a precious metal;
a midstream catalyst, disposed downstream of the upstream catalyst with respect to the exhaust gas flow direction, and having a straight flow structure or a wall flow structure supported with a second NOx occluding material, which occludes more NOx than does the first NOx occluding material in an intermediate temperature range, which is higher than the low temperature range, and with a precious metal; and
a downstream catalyst, disposed downstream of the midstream catalyst with respect to the exhaust gas flow direction, and having a straight flow structure or a wall flow structure supported with a third NOx occluding material, which occludes more NOx than do the first NOx occluding material and the second NOx occluding material in a high temperature range, which is higher than the intermediate temperature range, and with a precious metal.

2. The apparatus according to claim 1, wherein the first NOx occluding material comprises at least one selected from among Li and Mg.

3. The apparatus according to claim 1 or 2, wherein the second NOx occluding material comprises at least one selected from among Ba, Ca, and Sr.

4. The apparatus according to any one of claims 1 to 3, wherein the third NOx occluding material comprises at least one selected from among K, Na, Cs, and Rb.

5. The apparatus according to claim 1, wherein the upstream catalyst and the midstream catalyst have a straight flow structure, and the downstream catalyst has a wall flow structure.
